# EUROPÄISCHE PATENTANMELDUNG

(11) **EP 4 290 131 A2**
(43) Veröffentlichungstag der Anmeldung: **13.12.2023**
(21) Anmeldenummer: 23205314.0
(22) Anmeldetag: 10.08.2017
(51) Int. Cl.: F21V 8/00

(54) **WELLENLEITER SOWIE VORRICHTUNGEN ZUR DATENEINSPIEGELUNG**

(30) Priorität: 26.08.2016 DE 102016115938
(62) Teilanmeldung aus: 17757485.2
(71) Anmelder: Carl Zeiss Jena GmbH, 07745 Jena (DE)
(72) Erfinder: ERLER, Christoph, 07745 Jena (DE); RIETHMÜLLER, Mirko, 04157 Leipzig (DE); LÜTZ, Andreas, 07745 Jena (DE); GATTO, Alexandre, 07751 Jena Münchenroda (DE); SONDERMANN, Mario, 01731 Quohren (DE)
(74) Vertreter: Sticht, Andreas

(57) **Zusammenfassung**

Es wird eine Wellenleiteranordnung bereitgestellt, welche diffraktive Strukturen in zwei zueinander parallelen Schichten aufweisen und die zum Einkoppeln, Aufweiten und Auskoppeln von Licht dienen.

## Beschreibung

Die vorliegende Anmeldung betrifft Wellenleiter zum Leiten von Licht sowie Wellenleiteranordnungen und Vorrichtungen zur Dateneinspiegelung, welche derartige Wellenleiter benutzen.

Vorrichtungen zur Dateneinspiegelung werden allgemein benutzt, um einem Benutzer Daten bereitzustellen. Unter Daten werden in diesem Fall alle möglichen Arten von einzuspiegelnden Daten verstanden, umfassend Bilder, Zeichen, Symbole, Zahlen, Videos oder Kombinationen hiervon. Derartige Vorrichtungen zur Dateneinspiegelung werden beispielsweise in Datenbrillen oder Headup-Displays benutzt, beispielsweise in der Automobilindustrie. Derartige Headup-Displays umfassen im Allgemeinen eine bildgebende Einheit, welche beispielsweise eine Lichtquelle und eine Anzeige umfassen kann, ein Optikmodul zum Führen von Licht und eine Projektionsfläche. Die Projektionsfläche wird in diesem Zusammenhang auch als Combiner bezeichnet. In Automobilanwendungen ist ein derartiger Combiner häufig in die Windschutzscheibe eingebettet, sodass die eingespiegelten Daten betrachtet werden können, ohne den Blick von der Straße abzuwenden. Bei anderen Varianten kann der Combiner getrennt von der Windschutzscheibe angeordnet sein. Andere Anwendungen umfassen beispielsweise funktionale Fensterscheiben in Bus, Bahn oder im Automobilbereich oder Motorradhelme.

In allgemeiner Weise wird bei derartigen Anordnungen durch die bildgebende Einheit, beispielsweise eine Leuchtdiodenmatrix als Quelle und eine TFT-Anzeige, ein Bild erzeugt, welches mittels eines oder mehrere Spiegel und gegebenenfalls weiterer optischer Bauelemente, welche das Optikmodul bilden, und eines Combiners in das Sichtfeld des Betrachters projiziert wird.

Herkömmliche Anordnungen nutzen überwiegend refraktive (brechende) oder reflektive optische Bauelemente zur Strahlformung, was einen relativ hohen Bauraumbedarf und ein relativ hohes Gewicht ergibt.

Die US 8,611,014 B2 offenbart diesbezüglich einen kompakteren Aufbau, der einen Wellenleiter mit drei diffraktiven Reliefstrukturen, welche in einem transparenten Material eingebettet sind, benutzt. Eine erste der Reliefstrukturen dient zum Einkoppeln in den Wellenleiter, eine zweite der Reliefstrukturen dient zur Strahlaufweitung und eine dritte der Reliefstrukturen dient zur Auskopplung. Nachteilig an dieser Lösung ist die Beschränkung auf eine Wellenlänge sowie die technologisch anspruchsvolle Einbettung und Replizierung der Reliefstrukturen. Reliefstrukturen ohne Einbettung sind auf der anderen Seite aufgrund der sensiblen Strukturen nicht empfehlenswert.

Aus "A full-color eyewear display using planar waveguides with reflection volume holograms", Hiroshi Mukawa et al., Journal of the Society for Information Display, Band 17, Ausgabe 3, Seiten 185-193, März 2009, ist ein eindimensionaler Wellenleiter mit Volumenhologrammen bekannt. Eine Strahlaufweitung erfolgt bei diesem Wellenleiter nicht.

Die US 2014/0104665 A1 offenbart einen Wellenleiter in einer Richtung mit einer Einkopplungsstruktur und einer Auskopplungsstruktur, wobei Schichtstapel für verschiedene Wellenlängen bereitgestellt sein können.

Eine weitere Wellenleiterstruktur für mehrere verschiedene Wellenlängen ist auch aus der US 2013/0314789 A1 bekannt, wobei hier ebenso eingebettete Mikrostrukturen verwendet werden.

Es ist eine Aufgabe, Wellenleiter sowie Vorrichtungen zur Dateneinspiegelung mit derartigen Wellenleitern bereitzustellen, bei welchen die oben genannten Nachteile zumindest teilweise abgemildert oder überwunden sind. Zudem besteht ein Bedarf an erhöhter Flexibilität der Einsetzbarkeit derartiger Wellenleiter.

Es werden ein Wellenleiter nach Anspruch 1, eine Wellenleiteranordnung nach Anspruch 14 sowie eine Vorrichtung zur Dateneinspiegelung mit einem derartigen Wellenleiter nach Anspruch 16 bereitgestellt. Die Unteransprüche definieren weiter Ausführungsformen.

Gemäß einem ersten Aspekt wird ein Wellenleiter bereitgestellt, umfassend:
eine erste diffraktive Struktur zum Empfangen von Licht und zum Beugen des Lichts in den Wellenleiter unter einem Winkel größer als der Winkel der Totalreflexion des Wellenleiters, und
eine zweite diffraktive Struktur zum Aufweiten des Lichts in dem Wellenleiter und zum Beugen des Lichts in dem Wellenleiter zum Auskoppeln des Lichts aus dem Wellenleiter.

So kann ein kompakter Wellenleiter bereitgestellt werden.

Bevorzugt umfasst die erste diffraktive Struktur ein erstes volumenholografisches Gitter und die zweite diffraktive Struktur ein zweites volumenholografisches Gitter.

Der Wellenleiter kann weiter eine dritte diffraktive Struktur umfassen, wobei die erste diffraktive Struktur eingerichtet ist, das Licht in Richtung der dritten diffraktiven Struktur in den Wellenleiter zu beugen, wobei die dritte diffraktive Strukturangeordnet ist, das Licht in dem Wellenleiter in einer ersten Richtung aufzuweiten und in Richtung der zweiten diffraktiven Struktur zu beugen, und wobei die zweite diffraktive Struktur eingerichtet ist, das Licht in einer zweiten Richtung aufzuweiten, welche im Wesentlichen senkrecht zur ersten Richtung ist.

Die dritte diffraktive Struktur kann ein volumenholografisches Gitter umfassen.

Volumenholografische Gitter sind dabei als Volumenhologramme implementierte Gitter. Durch die Verwendung dreier derartiger Volumenhologramme kann effektiv eine Strahlaufweitung erreicht werden. Ein Volumenhologramm ist dabei ein Hologramm, welches allgemein in einem lichtempfindlichen Volumenmaterial durch Belichtung und Entwicklung erzeugt wird. Dabei kann zunächst ein Master durch Belichtung mit zwei oder mehr kohärenten Lichtwellen erreicht werden, und spätere Duplikate können durch Kontaktreplizierung erzeugt werden.

Die dritte diffraktive Struktur kann eine in der ersten Richtung variierende Effizienz aufweisen, und die zweite diffraktive Struktur kann eine in der zweiten Richtung variierende Effizienz aufweisen. Auf diese Weise kann eine gleichmäßige Strahlaufweitung erfolgen.

Die erste diffraktive Struktur, die zweite diffraktive Struktur und/oder die dritte diffraktive Struktur können als Reflexionsgitter ausgestaltet sein.

Die zweite diffraktive Struktur kann eine räumlich variierende Effizienz aufweisen, um eine gleichmäßige Strahlaufweitung zu erreichen.

Die erste diffraktive Struktur, die zweite diffraktive Struktur und/oder die dritte diffraktive Struktur können wellenlängenselektiv sein.

Insbesondere können die erste diffraktive Struktur, die zweite diffraktive Struktur und/oder die dritte diffraktive Struktur jeweils eine erste Teilstruktur, welche sensitiv für eine erste Gruppe von Wellenlängen ist, und eine zweite diffraktive Teilstruktur, welche sensitiv für eine zweite Gruppe von Wellenlängen ist, umfasst, wobei sich die erste Gruppe von Wellenlängen von der zweiten Gruppe von Wellenlängen unterscheidet. Auf diese Weise können verschiedene Farbkanäle unabhängig von dem Wellenleiter geleitet und aufgeweitet werden.

Die erste Gruppe von Wellenlängen und die zweite Gruppe von Wellenlängen können jeweils eine Wellenlänge im roten, grünen und blauen Spektralbereich aufweisen.

Die erste Teilstruktur kann jeweils über der zweiten Teilstruktur angeordnet sein.

Die zweite diffraktive Struktur kann eingerichtet sein, die erste Gruppe von Wellenlängen in eine andere Richtung auszukoppeln als die zweite Gruppe von Wellenlängen. So kann eine Eyebox vergrößert werden.

Die zweite diffraktive Struktur kann abbildende Eigenschaften aufweisen. So kann gleichzeitig zur Strahlaufweitung für eine gewünschte Abbildung gesorgt werden.

Zudem wird eine Wellenleiteranordnung mit einem Wellenleiter wie oben beschrieben bereitgestellt, weiter umfassend eine Adaptionsoptik, welche eingerichtet ist, das aus dem Wellenleiter ausgekoppelte Licht zu empfangen.

Die Adaptionsoptik kann eine Linse, ein Fresnel-Element, eine Fresnel-Platte, eine verstellbare Optik oder eine Alvarez-Linse umfassen.

Durch die Verwendung einer verstellbaren Optik kann die Wellenleiteranordnung flexibel eingesetzt werden.

Gemäß einem zweiten Aspekt wird eine Vorrichtung zur Dateneinspiegelung bereitgestellt, umfassend:
einen Bildgeber zum Erzeugen eines darzustellender Daten modulierten Lichtstrahls, und
einen Wellenleiter oder eine Wellenleiteranordnung wie oben beschrieben, welche angeordnet ist, den Lichtstrahl an der ersten diffraktive Struktur zu empfangen.

Die Vorrichtung kann weiter einen Combiner umfassen, welcher angeordnet ist, das aus dem Wellenleiter ausgekoppelte Licht zu empfangen.

Die Erfindung wird nachfolgend anhand verschiedener Ausführungsbeispiele näher erläutert. Es zeigen:
Fig. 1 eine Draufsicht auf einen Wellenleiter gemäß einem Ausführungsbeispiel,
Fig. 2 eine Teilquerschnittsansicht des Wellenleiters der Fig. 1,
Fig. 3 eine Querschnittsansicht des Wellenleiters der Fig. 1,
Fig. 4 eine Draufsicht des Wellenleiters der Fig. 1,
Fig. 5 eine schematische Darstellung einer Vorrichtung mit dem Wellenleiter der Fig. 1-4,
Fig. 6 eine weitere schematische Darstellung einer Vorrichtung mit dem Wellenleiter der Fig. 1-4,
Fig. 7 eine Querschnittsansicht eines Wellenleiters gemäß einem weiteren Ausführungsbeispiel,
Fig. 8 eine Darstellung einer Vorrichtung zur Dateneinspiegelung gemäß einem Ausführungsbeispiel,
Fig. 9 eine Darstellung eines Wellenleiters gemäß einem Ausführungsbeispiel,
Fig. 10 eine Darstellung einer Wellenleitervorrichtung gemäß einem Ausführungsbeispiel,
Fig. 11 eine Darstellung einer Wellenleiteranordnung gemäß einem weiteren Ausführungsbeispiel,
Fig. 12 eine Darstellung einer Vorrichtung zur Dateneinspiegelung gemäß einem Ausführungsbeispiel,
Fig. 13 eine Darstellung einer Vorrichtung zur Dateneinspiegelung gemäß einem weiteren Ausführungsbeispiel,
Fig. 14 eine Darstellung einer Vorrichtung zur Dateneinspiegelung gemäß einem weiteren Ausführungsbeispiel,
Fig. 15 eine Darstellung einer Vorrichtung zur Dateneinspiegelung gemäß einem weiteren Ausführungsbeispiel,
Fig. 16 eine Darstellung einer Vorrichtung zur Dateneinspiegelung gemäß einem weiteren Ausführungsbeispiel, und
Fig. 17A-17C Darstellungen zur Erläuterung einer verstellbaren Optik des Ausführungsbeispiels der Fig. 16.

Im Folgenden werden verschiedene Ausführungsbeispiele detailliert erläutert. Diese Erläuterung dient lediglich der Veranschaulichung und ist nicht als einschränkend auszulegen. Beispielsweise ist eine Beschreibung eines Ausführungsbeispiels mit einer Vielzahl von Merkmalen oder Elementen nicht dahingehend auszulegen, dass alle diese Merkmale und Elemente zur Implementierung notwendig sind. Vielmehr können bei anderen Ausführungsbeispielen auch manche dieser Elemente oder Merkmale weggelassen sein und/oder durch alternative Merkmale oder Elemente ersetzt sein. Zusätzlich zu den explizit dargestellten oder beschriebenen Merkmalen und Elementen können auch weitere Merkmale oder Elemente bereitgestellt sein, beispielsweise in herkömmlichen Vorrichtungen zur Dateneinspiegelung verwendete Elemente.

Elemente verschiedener Ausführungsbeispiele können miteinander kombiniert werden, sofern nichts anderes angegeben ist. Variationen oder Abwandlungen, welche für eines der Ausführungsbeispiele beschrieben werden, können auch auf andere Ausführungsbeispiele angewendet werden.

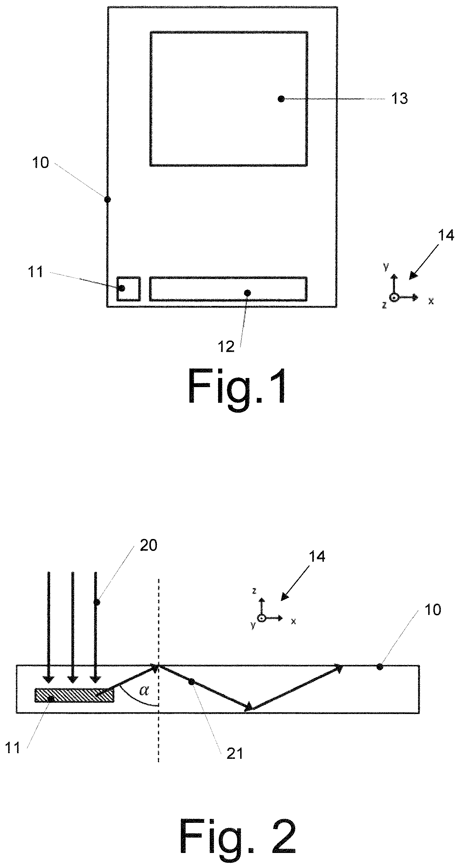

Zunächst wird ein erstes Ausführungsbeispiel eines Wellenleiters und unter Bezugnahme auf die Fig. 1-4 dargestellt. Die Fig. 1-4 zeigen dabei verschiedene Ansichten eines Wellenleiters 10 gemäß einem Ausführungsbeispiel. Ein Koordinatensystem 14 dient in den Fig. 1-4 zur Orientierung.

Der Wellenleiter 10 umfasst ein transparentes Material, beispielsweise Glas, Polymethylmethacrylat (PMMA) oder dergleichen, mit zumindest drei eingebetteten Volumenhologrammen 11, 12 und 13. Volumenhologramme umfassen volumenholografische Schichten, in welche Phasengitter durch lokale Modulation des Brechungsindex durch Belichtung eingearbeitet (belichtet) sind. Volumenhologramme arbeiten dabei wellenlängen- und winkelselektiv. Dies bedeutet, dass insbesondere Licht einer bestimmten Arbeitswellenlänge um einen bestimmten Winkel (Designwinkel) gebeugt werden kann. Um einen Wellenleiter für verschiedene Wellenlängen zu erzeugen, kann beispielsweise für verschiedene Wellenlängen jeweils ein Gitter in dieselbe volumenholografische Schicht geschrieben werden. Beispielsweise kann für eine blaue, eine rote und eine grüne Wellenlänge jeweils ein volumenholografisches Gitter in die Schicht geschrieben werden. Jedes Gitter kann dabei für den gleichen Einfalls- und Beugungswinkel geschrieben sein, sodass Licht aller Wellenlängen, für die das volumenholografische Gitter ausgelegt ist, in die gleiche Richtung gebeugt wird. Dieser wellenlängenselektive Effekt tritt bei volumenholografischen Reflexionsgittern stärker auf als bei volumenholografischen Transmissionsgittern.

Als Material für die volumenholografischen Schichten können prinzipiell alle geeigneten photorefraktiven Materialien verwendet werden, wie beispielsweise Photopolymere, photorefraktive Gläser oder speziell dotierte Kunststoffe wie beispielsweise PMMA-basierte Kunststoffe wie in Y. Gritsai et al. "Dye-doped PQ-PMMA phase holographic materials for DFB lasing", Journal of Optics, Band 16, beschrieben.

Der Wellenleiter 10 umfasst insbesondere ein volumenholografisches Einkoppelgitter 10, ein volumenholografisches Expandergitter 12 zur Strahlaufweitung und ein volumenholografisches Auskoppelgitter 13. Die Funktion dieser drei volumenholografischen Gitter wird im Folgenden unter Bezugnahme auf die Fig. 2-4 näher erläutert.

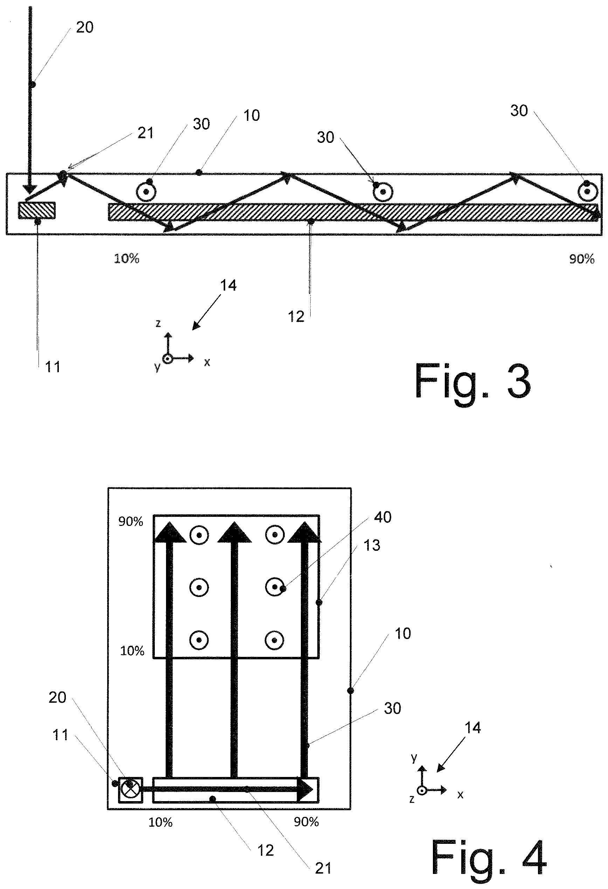

Fig. 2 zeigt eine Teilquerschnittsansicht des Wellenleiters 10 mit dem Einkoppelgitter 11. Das Einkoppelgitter 11 ist dabei als Reflexionshologramm ausgestaltet und ist in das transparente Material des Wellenleiters 10 eingebettet. In z-Richtung auf das Einkoppelgitter 11 einfallende Lichtstrahlen 20 werden unter einem Winkel α gebeugt. Der Winkel α ist dabei größer als der Winkel der Totalreflexion des Wellenleiters 10, welcher sich aus dem Brechungsunterschied zwischen dem Wellenleitermaterial des Wellenleiters 10 und dem Brechungsindex des umgebenden Mediums (zum Beispiel Luft oder ein Einbettungsmaterial) ergibt. Die Lichtstrahlen 20 können dabei insbesondere als kollimierte plane Welle vorliegen. Das Einkoppelgitter (11, 11A, 11B) muss nicht unbedingt eine plane Welle als Lichtstrahl 20, 20A, 20B beugen, sondern kann auch beispielsweise eingerichtet sein, eine divergente Welle, die beispielsweise von einem Bildgeber erzeugt wird, als plane Welle in Richtung des Expandergitters zu beugen. Somit werden die gebeugten Lichtstrahlen als Lichtstrahlen 21 totalreflektiert und breiten sich in x-Richtung zu dem Expandergitter 12 aus. Die Funktion des Expandergitters 12 ist in Fig. 3 dargestellt.

Das Expandergitter beugt das Licht zur y-Richtung hin wie durch Lichtstrahlen 30 in Fig. 3 angedeutet, wobei der Winkel wiederum größer als der Winkel der Totalreflexion, beispielsweise größer als 60° ist. Das Expandergitter weist dabei einen Effizienzverlauf mit steigender Effizienz in x-Richtung auf, beispielsweise von 10% bis 90% wie in Fig. 3 angedeutet. Die Effizienz bezeichnet dabei den Anteil des auftreffenden Lichts, der tatsächlich gebeugt wird, während der Rest des Lichts durch das Expandergitter 12 hindurchgeht. Dies bewirkt, dass, wie in Fig. 3 angedeutet, der Lichtstrahl 21 verteilt über die gesamte Länge des Expandergitters 12 gebeugt wird, was effektiv zu einer Strahlaufweitung in x-Richtung führt. Die Gitterstruktur des Expandergitters 12 ändert sich dabei in x-Richtung nicht, und der Verlauf der Effizienz wird über einen Verlauf der Brechungsindexmodulation erreicht. Am Anfang des Gitters 12 in x-Richtung gesehen ist die Brechungsindexmodulation gering, am Ende stärker. Dieses Verhalten kann bei dem holografischen Belichtungsvorgang des Expandergitters 12 eingestellt werden, beispielsweise durch eine in x-Richtung ansteigende Belichtungsintensität (Dosis), d.h. die Belichtungsindexintensität ist auf der Seite des Einkoppelgitters am geringsten. Das Expandergitter 11 weitet dabei die Welle in einer Richtung auf und wird daher auch als 1D-Beamexpander bezeichnet.

Wie in Fig. 4 gezeigt, wird so das aufgeweitete Licht gemäß den Lichtstrahlen 30 zu dem Auskoppelgitter 13 gelenkt. Das Auskoppelgitter 13 ist wiederum als volumenholografische Schicht in dem transparenten Material des Wellenleiters 10 angeordnet und beugt die Lichtstrahlen 30 in z-Richtung, sodass sie aus dem Wellenleiter 10 ausgekoppelt werden, da der Beugungswinkel unterhalb des Winkels für Totalreflexion liegt, und beispielsweise 0° beträgt (senkrechter Austritt aus dem Wellenleiter 10). Die Effizienz des Auskoppelgitters 13 steigt dabei in y-Richtung an, beispielsweise von 10% bis 90%, sodass sich eine Aufweitung des Strahls in y-Richtung ergibt, nachdem er von dem Expandergitter 12 in x-Richtung aufgeweitet wurde. So ergibt sich eine zweidimensionale Aufweitung des Strahls.

In anderen Worten kann auf diesem Wege das eingekoppelte Licht 20 in zwei Richtungen expandiert werden und von dem Auskoppelgitter 13 wieder als plane Welle mit einer gleichmäßigen homogenen Effizienz über die Fläche des Auskoppelgitters 13 ausgekoppelt werden. Wie bereits erwähnt sind bei dem Ausführungsbeispiel der Fig. 1-4 die Gitter 11, 12 und 13 als volumenholografische Reflexionsgitter ausgestaltet. Über die Dicke der Gitter kann die Winkel- und Wellenlängenselektivität gezielt beeinflusst werden. Bei konstanter Dicke der Gitter bestimmt die eingestellte Brechungsindexmodulation (beispielsweise durch die Dosis bei der Belichtung) die Beugungseffizienz des Gitters für eine bestimmte Wellenlänge. Das Einkoppelgitter 11 kann dabei eine über seine Fläche homogene Beugungseffizienz, insbesondere eine möglichst hohe Beugungseffizienz, aufweisen, da die Aufgabe des Einkoppelgitters 11 darin besteht, den Lichtstrahl 20 um einen so großen Winkel effizient zu beugen, dass die Wellenleitung durch Totalreflexion in dem Wellenleiter 10 sichergestellt ist.

Die Gitter 12, 13 weisen hingegen bei dem Ausführungsbeispiel der Fig. 1-4 einen Verlauf der Beugungseffizienz auf, was bevorzugt über die Beleuchtungsintensität (Dosis) bei der Belichtung des Gitters eingestellt wird. Je höher die Belichtungsintensität bzw. die Dosis bei der Aufnahme des volumenholografischen Reflexionsgitters, umso höher ist die Brechungsindexmodulation. Somit lassen sich bei ansonsten ungeänderten geometrischen Bedingungen wie Beugungswinkel, Gitterkonstante und -dicke gezielt Bereiche verschiedener Beugungseffizienz erzeugen. Die holografischen Gitter 11-13 können insbesondere als sogenannte plane-to-plane-Gitter ausgestaltet sein, d.h. sie beugen eine plane Welle um einen jeweils konstanten Winkel.

Die Verwendung von plane-to-plane-Gittern hat dabei den Vorteil, dass das entsprechende fotoempfindliche Material mit einer bestimmten Wellenlänge λ₁ strukturiert (belichtet) werden kann, aber später mit einer anderen Wellenlänge λ₂ ausgelesen werden kann, d.h. verwendet werden kann. Bei Verwendung von RGB (Rot, Grün, Blau)-empfindlichem Photopolymer kann beispielsweise für einen Wellenlängenleiter, der bei λ₂ = 520 nm arbeitet, mit λ₁ = 532 nm belichtet werden. Fotoempfindliche Gläser können dagegen zum Beispiel mit λ₁ = 325 nm belichtet werden, auch wenn sie für die Wiedergabe mit 638 nm bestimmt werden. Andere Wellenlängenkombinationen sind ebenso möglich. Diese Verfahrensweise ist insbesondere bei plane-to-plane-Gittern möglich. Bei der Verwendung von sphärischen Wellen statt planen Wellen würden ohne Einsatz von Korrekturelementen hingegen Aberationen auftreten.

Bei dem Ausführungsbeispiel der Fig. 1-4 wird das Licht von dem Auskoppelgitter 13 in z-Richtung als Planwelle ausgekoppelt. Bei anderen Ausführungsbeispielen kann das Auskoppelgitter 13 auch mit einer Abbildungsfunktion als holografische Linse ausgestaltet sein. Auf diese Weise kann eine Abbildung erzeugt werden, ohne dass unbedingt eine weitere Optik notwendig ist.

Der Wellenleiter 10 der Fig. 1-4 kann als monochromatischer Wellenleiter oder als polychromatischer Wellenleiter ausgelegt sein, d.h. die volumenholografischen Gitter 11-13 können für eine einzige Wellenlänge oder auch für mehrere Wellenlängen ausgelegt sein. Insbesondere kann eine Auslegung für drei Wellenlängen, eine im roten, eine im grünen, und eine im blauen Bereich, erfolgen, um so RGB-Farbinformationen in dem Wellenleiter übertragen zu können. In einem derartigen Fall umfassen die Reflexionsgitter jeweils ein Gitter für grün (532 nm), eins für rot (z.B. 647 nm) und eins für blau (z.B. 460 nm), welche in die gleiche volumenholografische Schicht belichtet werden können. Bei Verwendung eines entsprechenden schmalbandigen Bildgebers, wobei derartige Bildgeber kommerziell erhältlich sind, wird jedes Gitter nur von der jeweiligen Wellenlänge "gesehen", ohne dass ein Übersprechen zwischen den Farbkanälen stattfindet.

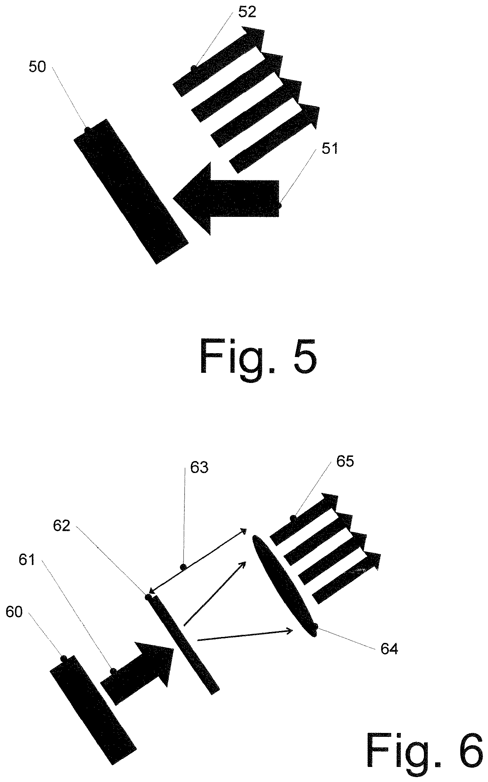

Das Ausführungsbeispiel der Fig. 1-4 kann insbesondere in Vorrichtungen zur Dateneinspiegelung verwendet werden. In diesem Fall enthalten die Lichtstrahlen 20 Bildinformation, welche durch den Wellenleiter aufgeweitet wird und dann beispielsweise auf einen Combiner projiziert werden kann. Beispiele für Bildgeber, welche zusammen mit dem Wellenleiter 10 verwendet werden können, um eine Vorrichtung zur Dateneinspiegelung zu bilden, sind in den Fig. 5 und 6 dargestellt.

Bei dem Ausführungsbeispiel der Fig. 5 wird eine kollimierte Lichtwelle 51 auf einen Bildgeber 50 gerichtet. Der Bildgeber 50 kann beispielsweise eine Mikrospiegelanordnung (DMD, Digital Mirror Device) oder eine LCoS-Anordung (Liquid Crystal on Silicon, d.h. Flüssigkristalle auf einem Siliziumsubstrat) umfassen. Hierdurch entsteht eine kollimierte entsprechend der Bildinformation modulierte Welle 52, welche dann als Lichtstrahl 20 in den Wellenleiter 10 eingekoppelt werden kann.

Eine andere Möglichkeit ist in Fig. 6 dargestellt. Hier wird auf einer Mattscheibe 62 ein Zwischenbild erzeugt, indem die Mattscheibe 62 mit entsprechendem Licht 61 von einem Bildgeber 60, beispielsweise einer Mikrospiegelanordnung, einer LCoS-Anordnung, einem TFT-Display oder dergleichen beleuchtet wird. Mittels eine Kollimationsoptik 64, die im Abstand einer Brennweite 63 der Kollimationsoptik 64 zu der Mattscheibe 62 angeordnet ist, wird ein kollimierter Lichtstrahl 65 mit der Bildinformation erzeugt, welcher wiederum als Lichtstrahl 20 in den Wellenleiter 10 eingekoppelt werden kann.

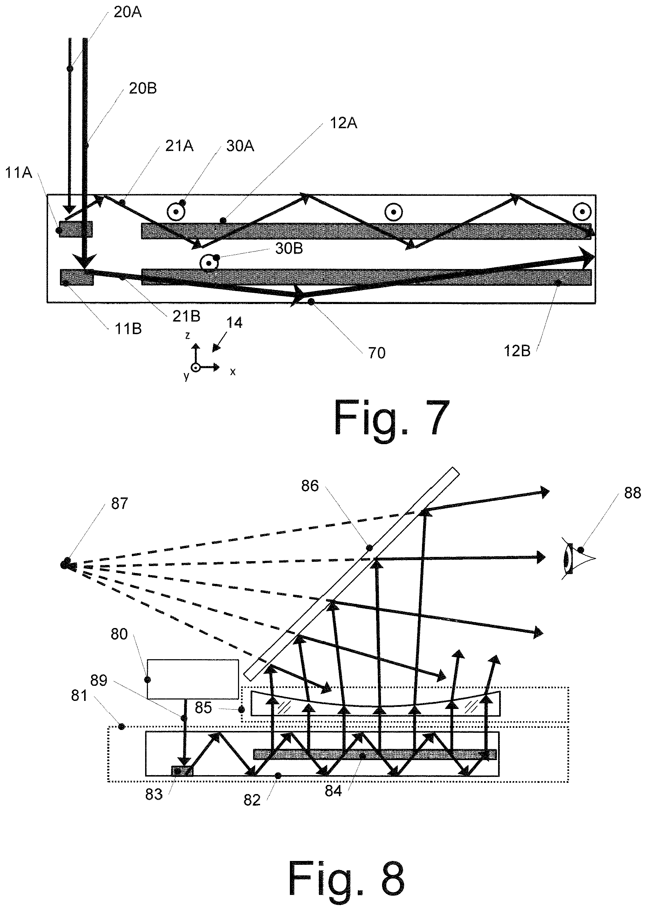

Bei dem Ausführungsbeispiel der Fig. 1-4 weisen die Gitter jeweils eine einzige holografische Schicht aus. Es können jedoch auch mehrere holografische Schichten verwendet werden, womit Licht verschiedener Wellenlängen separat aufgeweitet werden kann. Ein Ausführungsbeispiel hierfür ist in Fig. 7 gezeigt. In Fig. 7 ist dabei insbesondere eine Querschnittsansicht entsprechend der Ansicht der Fig. 3 dargestellt. Um Wiederholungen zu vermeiden, wird bei der Beschreibung des Ausführungsbeispiels der Fig. 7 auf die Fig. 1-4 Bezug genommen.

In Fig. 7 ist ein Wellenleiter 70 dargestellt, welcher wie der Wellenleiter 10 aus einem transparenten Material besteht. In dem Wellenleiter 7 sind Einkoppelgitter, Expandergitter und Auskoppelgitter entsprechend den Gittern des Wellenleiters 10 in zwei Schichten angeordnet. In Fig. 7 ist dabei in einer ersten Schicht ein Einkoppelgitter 11A und ein Expandergitter 12A dargestellt, und in einer zweiten Schicht ein Einkoppelgitter 11B und ein Expandergitter 12B. Zudem sind (nicht dargestellt) noch jeweilige Auskoppelgitter in dem Wellenleiter 70 bereitgestellt.

Die Schichten können dabei für verschiedene Wellenlängen ausgelegt sein und verschiedene Beugungswinkel aufweisen. Bei dem Ausführungsbeispiel der Fig. 7 können beispielsweise das Einkoppelgitter 11A, das Expandergitter 12A und das zugehörige Auskoppelgitter für drei Wellenlängen von 442 nm (blau), 514 nm (grün) und 638 nm (rot) ausgelegt sein, und das Einkoppelgitter 11A kann einen Beugungswinkel von zum Beispiel 60° aufweisen. Somit wird ein Lichtstrahl 12A, beispielsweise kollimiertes Licht, mit diesen Wellenlängen als Lichtstrahl 21A von dem Einkoppelgitter 11A gebeugt und dann von dem Expandergitter 12A als Lichtstrahl 30A expandiert und gebeugt. Hinsichtlich des Effizienzverlaufes gilt für die Expandergitter 12A, 12B sowie die entsprechenden Auskoppelgitter das unter Bezugnahme auf die Fig. 1-4 beschriebene.

Das Einkoppelgitter 11B, das Expandergitter 12B sowie das entsprechende Auskoppelgitter kann hingegen beispielsweise für Wellenlängen von 460 nm (blau), 532 nm (grün) und 660 nm (rot) ausgelegt sein und einen Beugungswinkel von 70° aufweisen. Somit wird nicht mit diesen Wellenlängen entsprechend einem Lichtstrahl 20B, beispielsweise einer planen Welle, von dem Einkoppelgitter 11B gebeugt als Lichtstrahl 21B und von dem Expandergitter 12B als weiterer Lichtstrahl 30B gebeugt. Da Volumenhologramme stark wellenlängenselektiv sind, sind die beiden Kanäle getrennt, d.h. die Gitter 11A, 12A beeinflussen die Lichtstrahlen 20A, 21B, 30B im Wesentlichen nicht, und die Gitter 11A, 12A beeinflussen die Lichtstrahlen 20A, 21A, 30A im Wesentlichen nicht. Die Bildinformationen können dann von einem Auskoppelgitter mit Abbildungsfunktion verschieden abgebildet werden oder auch von weiteren, außerhalb des Wellenleiters 70 angeordneten Wellenlängen selektiven Hologrammen weiter beispielsweise in verschiedene Ebenen als virtuelles oder reelles Bild zur Betrachtung von einem Benutzer abgebildet werden.

Zu bemerken ist, dass die in Fig. 7 dargestellte Trennung der Farbkanäle nicht unbedingt durch räumlich getrennte holografische Schichten erfolgen muss. Es lassen sich auch in dieselbe holografische Schicht mehrere Kanäle getrennt belichten ähnlich der oben beschriebenen Belichtung für mehrere Farben in einer Schicht. Durch die Verwendung unterschiedlicher Beugungswinkel wird dabei übersprechend zwischen den Kanälen verringert.

Zudem können auch mehr als zwei Schichten, beispielsweise drei oder mehr Schichten, verwendet werden.

Ausführungsformen für verschiedene Wellenlängen und mit verschiedenen Winkeln können auch ausgenutzt werden, um eine große Eyebox zu ermöglichen, d.h. einen großen Bereich in einer Vorrichtung zur Dateneinspiegelung, indem einzuspiegelnde Daten betrachtet werden können. Beispielsweise können für drei Richtungen jeweils ein Auskoppelgitter in eine entsprechende volumenholografische Schicht belichtet werden, beispielsweise schräg links, senkrecht und schräg rechts, was zu einer Aufweitung der Eyebox führt. Dies kann für verschiedene Wellenlängen erfolgen.

Das oder die Auskoppelgitter können wie bereits erwähnt abbildende Eigenschaften aufweisen, beispielsweise entsprechend einer sphärischen Linse. Dies kann nicht nur eine virtuelle Abbildung (Erzeugung eines virtuellen Bildes), sondern auch die Erzeugung eines reellen Bildes vor dem Wellenleiter ermöglichen, was einen Einsatz als holografisches Projektionssystem für reelle Projektionen im Raum ermöglicht.

Zudem können verschiedene Einkoppelgitter auch an verschiedenen Stellen in der x-y-Ebene angeordnet sein, d.h. die Anordnung muss nicht übereinander wie in Fig. 7 sein. Allgemein ist die dargestellte Anordnung von Einkoppelgitter, Expandergitter und Auskoppelgitter nur als Beispiel zu verstehen, und es sind auch andere Anordnungen möglich.

Die beschriebenen Wellenleiter beruhen auf der Totalreflexion der im zick-zack-geführten Lichtstrahlen an der Grenzfläche zwischen Wellenleiter und umgebenden Medium, beispielweise Luft. Das umgebende Medium muss jedoch nicht unbedingt Luft sein. Der Wellenleiter kann auch in ein Material mit einem niedrigerem Brechungsindex als der Brechungsindex des Wellenleiters eingebettet sein. Beispielsweise kann der Wellenleiter aus BK7-Glas gefertigt sein, welches einen Brechungsindex von n = 1,518 aufweist, und in Quarzglas mit einem Brechungsindex n = 1,46 eingebettet sein, wobei ein Beugungswinkel von 80° verwendet werden kann.

Somit können unter Verwendung von Volumengitter kompakterweise eine Strahlaufweitung sowie bei Bedarf auch virtuelle oder reelle Abbildungen, gegebenenfalls in verschiedenen Ebenen, polychromatisch realisiert werden.

In Fig. 8 ist eine weitere Vorrichtung zur Dateneinspiegelung dargestellt. Die Vorrichtung der Fig. 8 umfasst einen Bildgeber 80. Der Bildgeber 80 kann wie unter Bezugnahme auf die Fig. 5 und 6 erläutert ausgestaltet sein, d.h. eine Mikrospiegelanordnung, eine LCoS-Anordnung oder dergleichen verwenden.

Licht von dem Bildgeber 80, insbesondere kollimiertes Licht, wird als Lichtstrahl 89 einem Aufweitungsmodul 81 mit einem Wellenleiter 82 zugeführt. Bei manchen Ausführungsbeispielen kann der Wellenleiter 82 entsprechend dem Wellenleiter 10 der Fig. 1-4 oder entsprechend dem Wellenleiter 70 der Fig. 7 ausgebildet sein. Bei dem dargestellten Ausführungsbeispiel weist der Wellenleiter 82 ein Einkoppelgitter 83 und ein Auskoppelgitter 84 auf, wobei das Auskoppelgitter 84 gleichzeitig eine Strahlaufweitung vornimmt und somit als Expandergitter dient. Die Gitter 83, 84 können als Volumenhologramme implementiert sein, können aber auch mittels anderer diffraktiver (beugender) Strukturen ausgeführt sein, beispielsweise als Oberflächengitter oder als zwischen zwei Platten eingebettete Gitter wie in Fig. 8 dargestellt.

Das von dem Auskoppelgitter 84 aufgeweitete und ausgekoppelte Licht wird einer Adaptionsoptik 85 zugeführt, welche in dem Ausführungsbeispiel der Fig. 8 als Linse dargestellt ist und welche das ausgekoppelte Licht an eine konkrete Projektionsaufgabe, hier Projektion auf einen Combiner 86, anpasst. Der Combiner 86 kann dabei ein separater Combiner oder auch eine Windschutzscheibe oder eine Scheibe eines Motorradhelms oder dergleichen sein. In dem dargestellten Ausführungsbeispiel ist die Adaptionsoptik 85 eine abbildende Optik derart, dass für einen Betrachter 88 ein virtuelles Bild 87 der einzuspiegelnden Daten betrachtbar ist. Bei anderen Ausführungsbeispielen können auch Adaptionsoptiken zum Erzeugen reeller Bilder verwendet werden. In dem Ausführungsbeispiel der Fig. 8 umfasst die Adaptionsoptik 85 eine sphärische oder asphärische Linsenoptik. Andere Möglichkeiten für die Adaptionsoptik 85 werden später erläutert. Die Adaptionsoptik 85 kann dabei direkt auf dem Wellenleiter 82 angebracht sein, wobei in diesem Fall ein entsprechender Brechungsindexunterschied zur korrekten Wellenleitung zwischen Adaptionsoptik und Wellenleiter bereitgestellt sein muss, beispielsweise durch Verwendung von verschiedenen Gläsern mit verschiedenen Brechungsindizes.

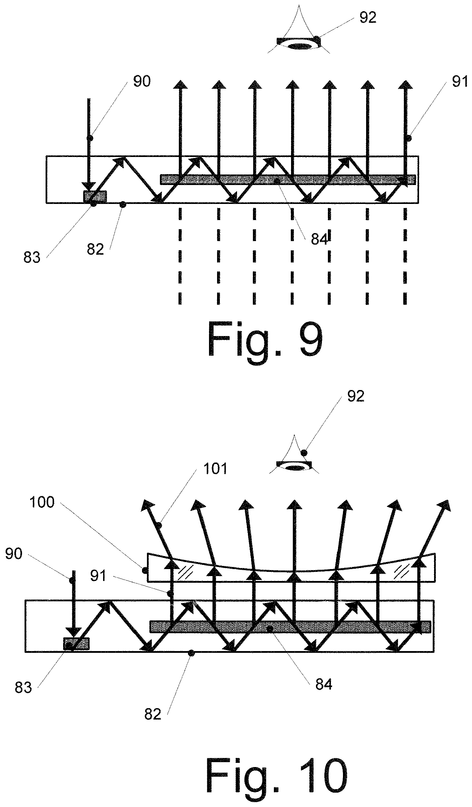

Die Fig. 9 und 10 zeigen Details des Ausführungsbeispiels der Fig. 8 mit weiteren Erläuterungen.

In Fig. 9 ist der Wellenleiter 82 mit dem Einkoppelgitter 83 und dem Auskoppelgitter 84 vergrößert dargestellt. Ein einzukoppelnder Strahl 90, beispielsweise von dem Bildgeber 80 der Fig. 8, wird von dem Einkoppelgitter 83 gebeugt, sodass eine Totalreflexion auftritt, wie bereits unter Bezugnahme auf die Figuren 1-4 beschrieben. Das Einkoppelgitter 83 kann dabei wie ebenfalls bereits beschrieben wellen- und winkelselektiv sein und für eine oder mehrere Wellenlängen ausgelegt sein. Das Auskoppelgitter 84 weitet den Lichtstrahl auf und koppelt jeweils einen Teil des Lichtstrahls als ausgekoppelten Lichtstrahl 91 aus, um eine Betrachtung durch einen Betrachter 92 zu ermöglichen. Wie bereits erläutert kann hierzu das Auskoppelgitter 84 einen Effizienzverlauf aufweisen. Es kann auch wie bei dem Ausführungsbeispiel der Fig. 1-4 ein weiteres Expandergitter bereitgestellt sein, um eine Aufweitung in zwei Richtungen zu ermöglichen.

In der Fig. 10 ist der Wellenleiter 82 der Fig. 9 zusammen mit einer Linse 100 als Beispiel für eine Adaptionsoptik dargestellt. Die Linse 100 erzeugt aus dem ausgekoppelten Lichtstrahl 91 einen Lichtstrahl 101, welcher in dem Ausführungsbeispiel der Fig. 10 ein divergenter Lichtstrahl (divergentes Lichtbündel) ist, um ein virtuelles Bild für den Betrachter 92 zu erzeugen.

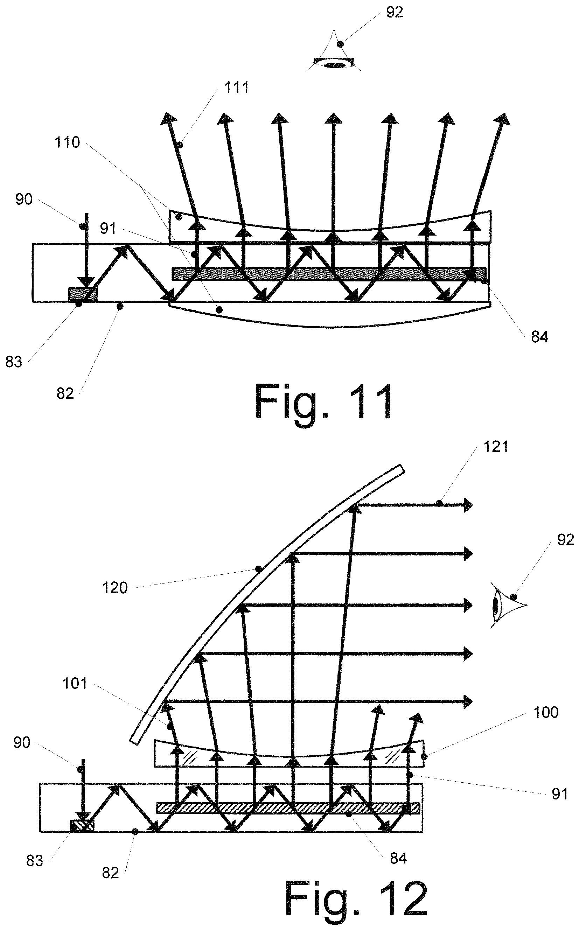

Variationen der Ausführungsbeispiele der Fig. 8-10 werden nun unter Bezugnahme auf die Fig. 11-17 erläutert. Zur Vermeidung von Wiederholungen tragen dabei gleiche oder einander entsprechende Elemente die gleichen Bezugszeichen und werden nicht nochmals näher erläutert.

Die Fig. 11 zeigt eine Variation der Fig. 10, bei welchem der Wellenleiter 82 in eine sphärische Optik 110 eingebettet ist, wobei die sphärische Optik 110 als Ganzes eine nicht abbildende Optik ist. Hierdurch kann ein Bild in einer endlichen Entfernung durch die von der Optik 110 abgelenkten Lichtstrahlen 111 für den Betrachter 92 erzeugt werden.

Die Fig. 12 zeigt eine Variation der Fig. 8, wobei als Adaptionsoptik 85 die Linse 100 der Fig. 10 verwendet wird und als Combiner eine gekrümmte Fläche 120, beispielsweise eine Windschutzscheibe verwendet wird, um dem Betrachter 92 Lichtstrahlen 121 zuzuführen. Bei dem dargestellten Beispiel sind dabei die Lichtstrahlen 121 parallel, was einem virtuellen Bild im Unendlichen entspricht. Somit können virtuelle Bilder sowohl in endlicher Entfernung wie in Fig. 8 oder in unendlicher Entfernung wie in Fig. 12 erzeugt werden.

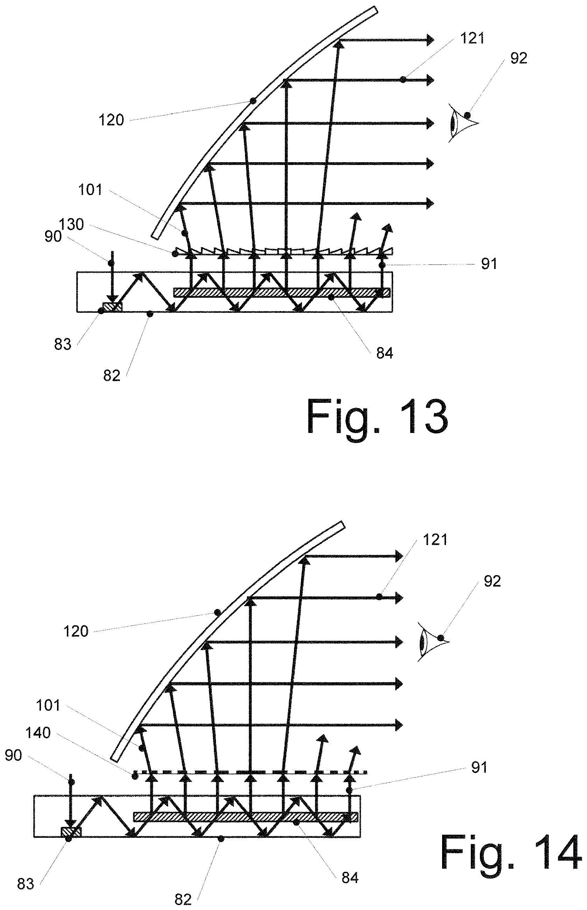

Die Fig. 13 zeigt eine Abwandlung der Fig. 12, bei welcher statt der Linse 100 eine Fresnel-Linse 130 bereitgestellt ist, welche im Wesentlichen die gleiche optische Funktion wie die Linse 100 der Fig. 12 aufweist. Auch mit Hilfe der Fresnel-Linse 130 kann ein virtuelles Bild im Unendlichen oder mit endlichem Abstand für den Betrachter 92 bereitgestellt werden.

Eine weitere Variante ist in Fig. 14 dargestellt. Bei dem Ausführungsbeispiel der Fig. 14 ist statt der Linse 120 der Fig. 12 eine Fresnel-Zonenplatte 140 bereitgestellt, welche im Wesentlichen die gleiche optische Funktion aufweist und ebenso eine Erzeugung eines virtuellen Bildes im Unendlichen oder auch mit endlicher Entfernung bewirkt.

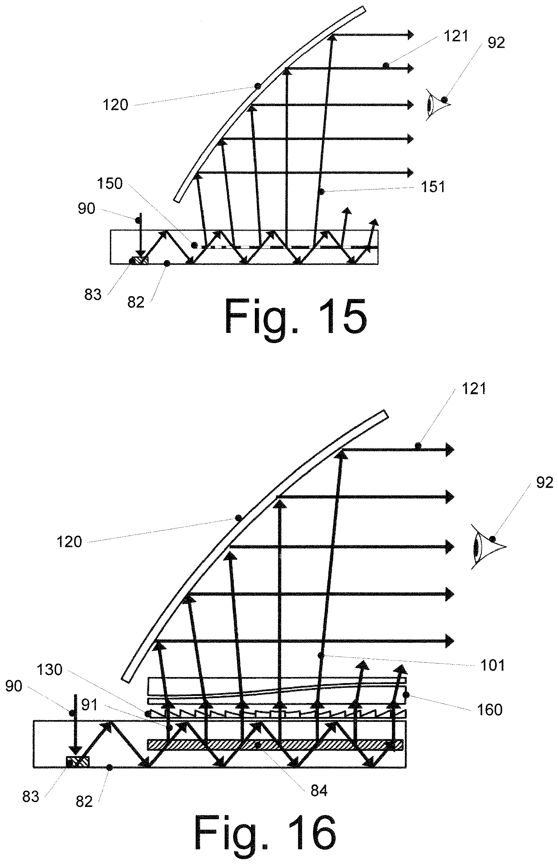

Ein weiteres Ausführungsbeispiel ist in Fig. 15 dargestellt. Bei dem Ausführungsbeispiel der Fig. 15 ist keine von dem Wellenleiter 82 getrennte Adaptionsoptik bereitgestellt, sondern der Wellenleiter 82 weist zum Auskoppeln ein abbildendes Gitte 150 auf, beispielsweise ein holografisches Gitter und/oder diffraktive Strukturen, welche das Licht nicht nur aus dem Wellenleiter auskoppeln, sondern auch Strahlen 15 gemäß einer optischen Funktion, beispielsweise entsprechend der Linse 120, für den Betrachter 92 abbilden.

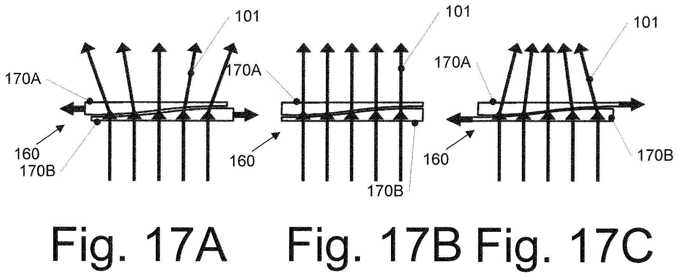

Ein weiteres Ausführungsbeispiel ist in Fig. 16 dargestellt, welches auf dem Ausführungsbeispiel der Fig. 13 beruht. Zusätzlich zu der Fresnel-Linse 130 ist hier eine variabler Optik 160 in Form einer Alvarez-Linse bereitgestellt, mittels der die Brennweite der gesamten Optik 130, 160 veränderbar ist. Bei anderen Ausführungsbeispielen kann das Fresnel-Element 130 auch durch eine herkömmliche Linse oder einer Fresnel-Platte wie in den Fig. 12 oder 14 ersetzt sein oder auch ganz weggelassen sein, sodass die Alvarez-Linse 160 das einzige optische Element der Adaptionsoptik darstellt. Statt einer Alvarez-Linse können auch andere variable Optiken, beispielsweise eine Flüssigkristalllinse, bereitgestellt sein. Der Effekt der Fresnel-Linse 160 ist in den Fig. 17A-17C dargestellt. Wie in den Fig. 17A-17C dargestellt, weist die Alvarez-Linse 160 zwei Optikkomponenten 170A, 170B auf, welche gegeneinander verschiebbar sind, um die optische Wirkung der Alvarez-Linse 160 zu verändern. So ergibt sich in der Position der Komponenten 170A, 170B der Fig. 17A eine zerstreuende Wirkung, in der Position der Fig. 17B im Wesentlichen keine Wirkung, d.h. die Lichtstrahlen gehen einfach durch die Alvarez-Linse 160 hindurch, und in der Position der Fig. 17C eine fokussierende Wirkung. Auf diese Weise kann beispielsweise die Entfernung eines virtuellen Bildes von dem Betrachter eingestellt werden.

Manchen Ausführungsbeispiele werden durch die nachfolgenden Klauseln definiert:
1. Wellenleiter, umfassend:
   eine erste diffraktive Struktur zum Empfangen von Licht und zum Beugen des Lichts in den Wellenleiter unter einem Winkel größer als der Winkel der Totalreflexion des Wellenleiters, und
   eine zweite diffraktive Struktur zum Aufweiten des Lichts in dem Wellenleiter und zum Beugen des Lichts in dem Wellenleiter zum Auskoppeln des Lichts aus dem Wellenleiter.
2. Wellenleiter nach Klausel 1, wobei die erste diffraktive Struktur ein erstes volumenholografisches Gitter umfasst und die zweite diffraktive Struktur ein zweites volumenholografisches Gitter umfasst.
3. Wellenleiter nach Klausel 1 oder 2, weiter umfassend eine dritte diffraktive Struktur, wobei die erste diffraktive Struktur eingerichtet ist, das Licht in Richtung der dritten diffraktiven Struktur in den Wellenleiter zu beugen, wobei die dritte diffraktive Struktur angeordnet ist, das Licht in dem Wellenleiter in einer ersten Richtung aufzuweiten und in Richtung der zweiten diffraktiven Struktur zu beugen, und wobei die zweite diffraktive Struktur eingerichtet ist, das Licht in einer zweiten Richtung aufzuweiten, welche im Wesentlichen senkrecht zur ersten Richtung ist.
4. Wellenleiter nach Klausel 3, wobei die dritte diffraktive Struktur ein volumenholografisches Gitter umfasst.
5. Wellenleiter nach Klausel 3 oder 4, wobei die dritte diffraktive Struktur eine in der ersten Richtung variierende Effizienz aufweist, und wobei die zweite diffraktive Struktur eine in der zweiten Richtung variierende Effizienz aufweist.
6. Wellenleiter nach einem der Klauseln 1-5, wobei die erste diffraktive Struktur, die zweite diffraktive Struktur und/oder die dritte diffraktive Struktur als Reflexionsgitter ausgestaltet sind.
7. Wellenleiter nach einem der Klauseln 1-6, wobei die zweite diffraktive Struktur eine räumlich variierende Effizienz aufweist.
8. Wellenleiter nach einem der Klauseln 1-7, wobei die erste diffraktive Struktur, die zweite diffraktive Struktur und/oder die dritte diffraktive Struktur wellenlängenselektiv sind.
9. Wellenleiter nach Klausel 8, wobei die erste diffraktive Struktur, die zweite diffraktive Struktur und/oder die dritte diffraktive Struktur jeweils eine erste Teilstruktur, welche selektiv für eine erste Gruppe von Wellenlängen ist, und eine zweite Teilstruktur, welche selektiv für eine zweite Gruppe von Wellenlängen ist, umfasst, wobei sich die erste Gruppe von Wellenlängen von der zweiten Gruppe von Wellenlängen unterscheidet.
10. Wellenleiter nach Klausel 9, wobei die erste Gruppe von Wellenlängen und die zweite Gruppe von Wellenlängen jeweils eine Wellenlänge im roten, grünen und blauen Spektralbereich aufweisen.
11. Wellenleiter nach Klausel 9 oder 10, wobei die erste Teilstruktur jeweils über der zweiten Teilstruktur angeordnet ist.
12. Wellenleiter nach einem der Klauseln 9-11, wobei die zweite diffraktive Struktur eingerichtet ist, die erste Gruppe von Wellenlängen in eine andere Richtung auszukoppeln als die zweite Gruppe von Wellenlängen.
13. Wellenleiter nach einem der Klauseln 1-12, wobei die zweite diffraktive Struktur abbildende Eigenschaften aufweist.
14. Wellenleiteranordnung, umfassend einen Wellenleiter nach einem der Klauseln 1-13, und eine Adaptionsoptik, welche eingerichtet ist, das aus dem Wellenleiter ausgekoppelte Licht zu empfangen.
15. Wellenleiteranordnung nach Klausel 14, wobei die Adaptionsoptik eine Linse, ein Fresnel-Element, eine Fresnel-Platte, eine verstellbare Optik oder eine Alvarez-Linse umfasst.
16. Vorrichtung zur Dateneinspiegelung, umfassend:
   einen Bildgeber zum Erzeugen eines darzustellender Daten modulierten Lichtstrahls, und
   einen Wellenleiter nach einem der Klauseln 1-13 oder eine Wellenleiteranordnung nach Klausel 14 oder 15, welche angeordnet ist, den Lichtstrahl an der ersten diffraktive Struktur zu empfangen.
17. Vorrichtung nach Klausel 16, weiter umfassend einen Combiner, welcher angeordnet ist, das aus dem Wellenleiter ausgekoppelte Licht zu empfangen.

In Anbetracht der Vielzahl von Variationen und Abwandlungen ist ersichtlich, dass die vorstehend beschriebenen Ausführungsbeispiele nicht als einschränkend auszulegen sind.

## Patentansprüche

1. Wellenleiter (70), umfassend:
eine erste diffraktive Struktur (11A) zum Empfangen von Licht und zum Beugen des Lichts in den Wellenleiter (70) unter einem Winkel größer als der Winkel der Totalreflexion des Wellenleiters (70),
eine zweite diffraktive Struktur, wobei die erste diffraktive Struktur (11A) eingerichtet ist, das Licht in Richtung der zweiten diffraktiven Struktur in den Wellenleiter zu beugen,
wobei die zweite diffraktive Struktur (12A) angeordnet ist, das Licht in dem Wellenleiter in einer ersten Richtung aufzuweiten und in Richtung einer dritten diffraktiven Struktur (13; 84) zu beugen, und
wobei die dritte diffraktive Struktur (13; 84) zum Beugen des Lichts in dem Wellenleiter zum Auskoppeln des Lichts aus dem Wellenleiter eingerichtet ist,
eine vierte diffraktive Struktur (11B) zum Empfangen von Licht und zum Beugen des Lichts in den Wellenleiter (70) unter einem Winkel größer als der Winkel der Totalreflexion des Wellenleiters (70),
eine fünfte diffraktive Struktur, wobei die vierte diffraktive Struktur (11A) eingerichtet ist, das Licht in Richtung der fünften diffraktiven Struktur in den Wellenleiter zu beugen, wobei die fünfte diffraktive Struktur (12B) angeordnet ist, das Licht in dem Wellenleiter in einer ersten Richtung aufzuweiten und in Richtung einer sechsten diffraktiven Struktur (13; 84) zu beugen, und
wobei die sechste diffraktive Struktur (13; 84) zum Beugen des Lichts in dem Wellenleiter zum Auskoppeln des Lichts aus dem Wellenleiter eingerichtet ist,
wobei die erste diffraktive Struktur (11A), die zweite diffraktive Struktur (12A) und die dritte diffraktive Struktur (13; 84) in einer ersten Schicht in dem Wellenleiter angeordnet sind, und
wobei die vierte diffraktive Struktur (11B), die fünfte diffraktive Struktur (12B) und die sechste diffraktve Struktur (13; 84) in einer zu der ersten Schicht parallelen zweiten Schicht in dem Wellenleiter (70) angeordnet sind.

2. Wellenleiter (70) nach Anspruch 1, wobei die erste und vierte diffraktive Struktur (11A, 11B) ein jeweiliges erstes volumenholografisches Gitter umfasst und die zweite diffraktive Struktur (13; 84) ein zweites volumenholografisches Gitter umfasst.

3. Wellenleiter (70) nach Anspruch 1 oder 2, wobei die dritte und sechste diffraktive Struktur (13; 84) jeweils eingerichtet ist, das Licht in einer zweiten Richtung aufzuweiten, welche im Wesentlichen senkrecht zur ersten Richtung ist.

4. Wellenleiter (70) nach Anspruch 3, wobei die zweite und vierte diffraktive Struktur (13) jeweils ein volumenholografisches Gitter umfasst.

5. Wellenleiter (70) nach Anspruch 3 oder 4, wobei die zweite und vierte diffraktive Struktur (12A, 12B) jeweils eine in der ersten Richtung variierende Effizienz aufweist, und wobei die dritte und sechste diffraktive Struktur (13; 84) jeweils eine in der zweiten Richtung variierende Effizienz aufweist.

6. Wellenleiter (70) nach einem der Ansprüche 1-5, wobei die erste diffraktive Struktur (11A), die zweite diffraktive Struktur (12A), die dritte diffraktive Struktur (13, 84), die vierte diffraktive Struktur (11B), die fünfte diffraktive Struktur (12B) und/oder die sechste diffraktive Struktur (13, 84) als Reflexionsgitter ausgestaltet sind.

7. Wellenleiter (70) nach einem der Ansprüche 1-6, wobei die dritte und sechste diffraktive Struktur (13; 84) jeweils eine räumlich variierende Effizienz aufweist.

8. Wellenleiter (70) nach einem der Ansprüche 1-7, wobei die erste diffraktive Struktur (11A), die zweite diffraktive Struktur (12A), die dritte diffraktive Struktur (13, 84), die vierte diffraktive Struktur (11B), die fünfte diffraktive Struktur (12B) und/oder die sechste diffraktive Struktur (13, 84) wellenlängenselektiv sind.

9. Wellenleiter (70) nach Anspruch 8, wobei die erste diffraktive Struktur (11A), die zweite diffraktive Struktur (12A) und die dritte diffraktive Struktur (13, 84) selektiv für eine erste Gruppe von Wellenlängen sind, und die vierte diffraktive Struktur (11B), die fünfte diffraktive Struktur (12B) und die sechste diffraktive Struktur (13, 84) selektiv für eine zweite Gruppe von Wellenlängen sind, umfasst, wobei sich die erste Gruppe von Wellenlängen von der zweiten Gruppe von Wellenlängen unterscheidet.

10. Wellenleiter (70) nach Anspruch 9, wobei die erste Gruppe von Wellenlängen und die zweite Gruppe von Wellenlängen jeweils eine Wellenlänge im roten, grünen und blauen Spektralbereich aufweisen.

11. Wellenleiter (70) nach Anspruch 9 oder 10, wobei die dritte diffraktive Struktur (13; 84) eingerichtet ist, die erste Gruppe von Wellenlängen in eine andere Richtung auszukoppeln als sechste diffraktive Struktur (13; 84) eingerichtet ist, die zweite Gruppe von Wellenlängen auszukoppeln.

12. Wellenleiter (70) nach einem der Ansprüche 1-11, wobei die dritte und sechste diffraktive Struktur (13; 84) jeweils abbildende Eigenschaften aufweist.

13. Vorrichtung zur Dateneinspiegelung, umfassend:
einen Bildgeber (80) zum Erzeugen eines darzustellender Daten modulierten Lichtstrahls, und
einen Wellenleiter (70) nach einem der Ansprüche 1-12, welcher angeordnet ist, den Lichtstrahl an der ersten und vierten diffraktive Struktur ( 11A, 11B) zu empfangen.

14. Vorrichtung nach Anspruch 13, weiter umfassend einen Combiner (86; 120), welcher angeordnet ist, das aus dem Wellenleiter (70) ausgekoppelte Licht zu empfangen.
